# EUROPEAN PATENT SPECIFICATION

(11) **EP 1 456 004 B1**
(45) Date of publication and mention of the grant of the patent: **14.03.2007**
(21) Application number: 02783469.6
(22) Date of filing: 11.12.2002
(51) Int. Cl.: B29C 49/00, B29C 49/42, B65B 59/04, B65B 9/04

(54) **MACHINE FOR FORMING CONTAINERS**
VORRICHTUNG ZUR HERSTELLUNG VON BEHÄLTERN
MACHINE POUR MOULER DES RECIPIENTS

(30) Priority: 11.12.2001 IT MO20010246
(43) Date of publication of application: 15.09.2004
(73) Proprietor: Sarong Societa'Per Azioni, 42046 Reggiolo (IT)
(72) Inventor: FINETTI, Primo, I-41037 Mirandola (IT); BARTOLI, Andrea, I-42100 Reggio Emilia (IT)
(74) Representative: Luppi, Luigi
(86) International application number: PCT/IB2002/005277
(87) International publication number: WO 2003/049921

(56) References cited:
- WO-A-01/25089
- DE-A- 2 440 372
- DE-B- 1 244 642
- US-A- 5 340 632

## Description

The present invention concerns a machine for forming containers, in particular a machine for forming one or more continuous strips of containers in heat-weldable and heat-formable plastic material.

In particular, the invention refers to a machine made according to the preamble of the first claim.

In general, in known machines, the half-moulds of an operating station are arranged immediately next to the half-moulds of the adjacent station, substantially without intermediate spaces, and the web's advancing step is in correlation with the length of the half-moulds. At each work cycle (in which the web advances by one step and the opposite half-moulds close over the web and reopen) the couple of half-moulds of each operating station treats a web portion of a length substantially equal to the an advancing step; on this web portion is provided the formation of a plurality of containers, still having a step arrangement. The web's advancing step should preferably be the same as an integer multiple of the containers' distance (where this multiple is the same as the number of containers that are processed at each operating cycle in each operating station), otherwise a fraction of said web portion remains unused because it constitutes reject material, which, although being part of the strip, is not actually part of the containers.

Therefore, in the known machines for forming a strip of containers, the operating stations, which are designed to operate according to a preset advancing step, are suitable for forming containers distributed with a reciprocal distance that is equal, or very slightly less, than an integer fraction of the preset advancing step, in order to minimise the waste of material.

One of the problems of the known machines is the adaptation to the format change of the containers (particularly if the format change involves an important modification to the distance between adjacent containers) without creating reject material.

Document DE-24 40 372 discloses a machine for manufacturing, filling and locking packing of foil material, consisting of several working stations with an upper and an under tool, the working stations are adjustably arranged along the advancing way by means of clamping pieces acting on rails. The mutual positioning of the working station should be determined for each station or group of stations according to the dimensions of the container to be produced and no means are provided for an automatic positioning of the working stations in relation to a change of format of the packing.

Document WO-01/25089 discloses apparatus and methods for packaging products in blow-thermoformed plastic containers comprising heating means for heating a thermoformable sheet material, fluid bed supporting means in said heating means for supporting said sheet material, sealing means of regions of said sheet material and forming means for forming containers from said sheet material.

The sealing station and the forming station comprises a first group and a second group of injector nozzles for injecting a forming fluid, for example pressurized air. The groups of nozzles may be moved from the sealing station to the forming station while the second group of nozzles is moved from the forming station to the sealing station, and vice-versa.

An object of the present invention is to improve the machines for forming containers.

An advantage of the invention is that it makes available a machine that adapts simply and rapidly to containers' format changes.

Another advantage is to obtain a machine that allows minimising the formation of reject material during the format change of the containers to be obtained, especially in the case of modification of the distance of the containers along the strip.

A further advantage is to obtain a reliable and accurate machine that is constructionally simple and cheap.

According to the invention, is provided a machine as defined by the claim 1.

The operating stations that work on the web can be positioned in the indexing direction of the web.

It may be possible that one of the stations, which acts as reference station, could not be positioned.

This reference station should preferably be an end station, preferably the station arranged as the last one.

The control for positioning the different operating stations should preferably be centralised.

It is furthermore preferable that the positioning of all the operating stations is controlled by a single actuating system and that the shift of each station is adjustable in relation to the shift of all the other stations.

A positioning system, which can be centralised, for positioning the operating stations is arranged by virtue of which the amount of the shift of each station is in a preset relation to the amount of the shifts of all the other stations.

It is preferable that the shifts of the different stations should be adjusted in such a way that, after the positioning of the stations, it is possible to replace the half-moulds with new half-moulds (purposely prepared to obtain containers with a different format), these new half-moulds are arranged very close each others, one immediately next to the other, substantially without an intermediate space between them.

Further features and advantages of the present invention will better appear from the following detailed description of an embodiment of the invention in subject, illustrated, by way of example and not of limitation, in the accompanying Figures.
Figure 1 shows a top plan view of a part of the forming machine in subject.

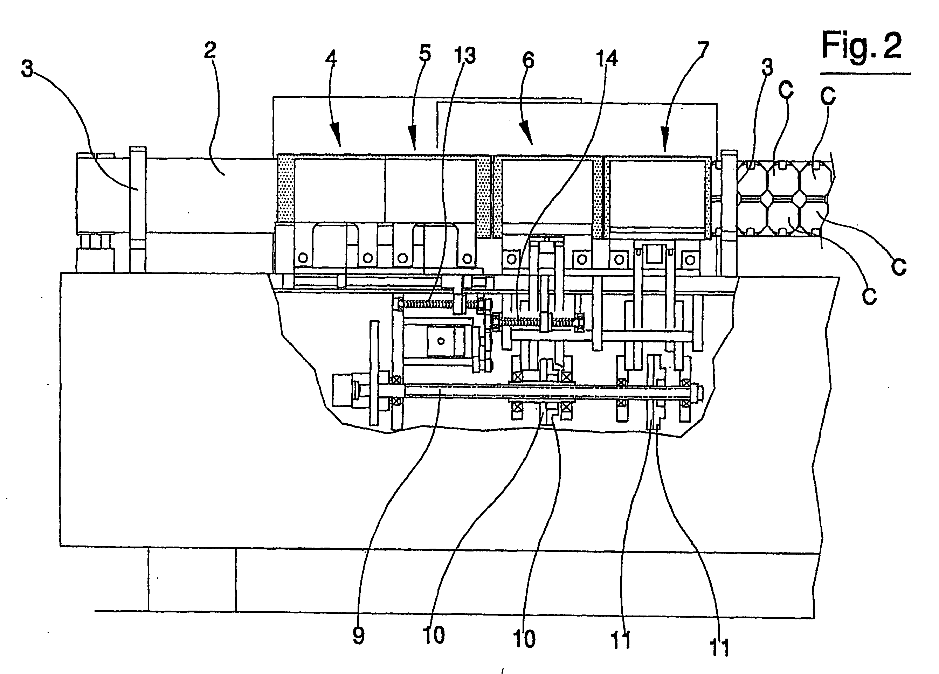

Figure 2 shows a side view of Figure 1 with certain parts removed to better show the others.
Figure 3 shows an enlarged detail of Figure 2.
Figure 4 shows the detail of Figure 3 in a different operating configuration.

With reference to the above-cited Figures, is shown a machine 1 for forming a continuous strip of containers arranged in succession one after the other.

The machine 1 comprises a feed line, along an advancing direction F, of at least two continuous webs 2 of material, each one of which in form of a relatively thin film, which advance facing one another. The two continuous webs could be made from a single continuous strip longitudinally folded in the shape of a V. The material of the webs 2 is preferably a heat-weldable and heat-formable plastic material. Each web 2 is unwound from a respective reel (not shown). The webs 2 index intermittently in direction F at a preset advancing step, dragged by known movement means that are formed, for example, by pairs of jaws 3 that can be moved back and forth and that are arranged for tighten the webs 2 during the forth motion and to release them during the return motion.

The advancing step of the webs 2 is adjustable: the step adjustment means is known and not shown: it may, for example, comprise a motion transmission mechanism that transmits the motion between a rotation shaft and the pair of jaws 3 and that, in turn, comprises one or more elements which are articulated by means of at least one trunnion, the position of which is adjustable, for example along a slot, so as to vary at will the reciprocal distance between two trunnions of the mechanism, and consequently to vary the stroke of the jaws 3.

The machine 1 comprises a plurality of operating stations, contiguous to one another and arranged along the feed line, which arranged for transforming the two webs 2 into a continuous strip of containers C. In the case in point the operating stations are, in succession, two pre-heating stations 4 and 5 for pre-heating the webs, a welding station 6 and a forming station 7. The length of each operating station, measured along the advancing direction F of the webs, is almost the same as the advancing step of these webs. The different stations 4, 5, 6, 7 are arranged one immediately in succession after the other. Each operating station comprises a pair of half-moulds 41, 51, 61, 71 opposite each other, between which the passage of the webs is provided. The half-moulds 41, 51, 61, 71 can easily be removed and replaced with other half-moulds, in the event of format change of the containers to be obtained.

Each pair of half-moulds 41, 51, 61, 71, in each operating station, can be operated to move between a first closing position, in which the half-moulds operate on the webs 2 (preferably in contact with the webs), and a second opening position, in which they are removed from the webs.

The approaching and removing movement, in direction H, should preferably be horizontal and orthogonal in relation to the preferably horizontal advancing direction F of the webs 2.

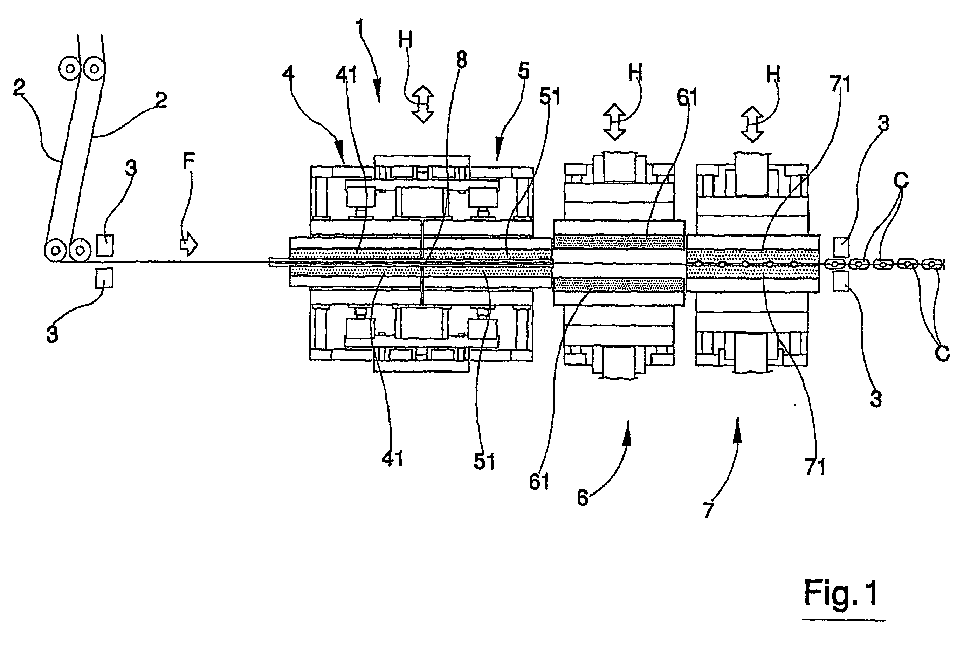

In Figure 1, solely by way of example, is shown the forming station 7 with the half-moulds 71 closed, i.e. when they are near the webs and operate on the webs 2 to define the forming cavities, whilst the pre-heating stations 4 and 5 and the welding station 6 are shown with the half-moulds 41, 51 and 61 open, i.e. far from the webs 2.

In the pre-heating stations 4 and 5, is arranged, between the webs 2, a separating wall 8 for preventing the reciprocal contact and the direct heat transmission between the webs during the pre-heating.

In the welding station 6 the webs 2 are heat-welded in preset welding zones so as to define alveoli, each of which has at least one opening.

In the forming station 7 the two half-moulds 71 opposite to each another, once they are drawn up to the closing position, originate forming cavities in which the containers are heat-formed by blowing a forming fluid that is injected inside the alveoli, by means of nozzles, through said openings. The injection of the forming fluid causes the expansion of the alveoli inside the forming cavities. The blowing means for blowing the forming fluid (usually compressed air) is known and not shown.

The operating means for opening and closing the half-moulds 41, 51, 61 and 71 is known and it is partially and schematically shown. The two pairs of pre-heating half-moulds 41 and 51 are movable in direction H, said pre-heating half-moulds 41 and 51 being rigidly connected, operated by, for example, fluidic axial actuators. The welding half-moulds 61 and the forming half-moulds 71, operate in the closing position, in contact with the webs at an operating pressure that is greater than that of the pre-heating half-moulds 41 and 51, and they are actuated for opening ad closing by a drive unit comprising a rotation shaft 9 that make to rotate, for each pair of half-moulds, one or more rotating control members (in the case in point cams 10 and 11, respectively) which are in turn connected, by means of a known motion transmission mechanism not shown, to the half-moulds 61 and 71 to actuate them in a coordinated manner for opening and closing.

The position of the pre-heating stations 4 and 5, and of the welding station 6 can be adjusted along a positioning direction that is parallel to the advancing direction F of the web. The two pre-heating stations 4 and 5 form a single group of stations that is movable in the positioning direction by means of a coupling, the coupling is slidable on an axial guide that is parallel to said positioning direction; the group of the pre-heating stations 4 and 5 that can be positioned along the guide, comprises both the pre-heating half-moulds 41 and 51, and the operating means (fluid-actuated) for operating opening and closing of the half-moulds in direction H.

Also the welding station 6, which comprises both the welding half-moulds 61 and the operating means for actuating the opening and closing movement of the half-moulds in direction H, is movable on a guide that is parallel to the positioning direction; it is substantially preferable that even the operating means for operating opening and closing of the half-moulds (except for the shaft 9 that make the cams 10 to rotate) can carry out the positioning movement on the guide integrally with the welding half-moulds 61.

The cams 10 that actuate the welding half-moulds 61 are connected to the rotation shaft 9 by means of the interposing of a support element 12 that is in turn connected to the shaft 9 with a known coupling that makes it integral in rotation, but axially slidable in relation to the shaft.

The machine comprises a positioning device arranged for carrying out a controlled shift of said operating stations (pre-heating 4 and 5 and welding 6) in the positioning direction so that the amount of the shifts of each station is in a predetermined relation to the amount of the shift of the other stations. In particular, the positioning device is arranged for shift the two stations, rigidly connected to each other, which are located before all the others, i.e. the two pre-heating stations 4 and 5, by a preset amount in a preset ratio with respect to the shift of the subsequent welding station 6 (said amounts and their ratio depend on the advancing step that you wish to obtain - and therefore they depend on the length of the operating stations - as well as on the condition of maintaining the reciprocal contiguousness of the different stations).

The positioning device comprises two manoeuvring screws 13 and 14, one of which is arranged for operating the positioning movement of the two pre-heating stations 4 and 5, and the other one is arranged for operating the shift of the welding station 6.

The positioning device further comprises a motion transmission mechanism arranged for transmitting the motion from a single actuating member to both the manoeuvring screws 13 and 14, according to the transmission ratio that is preset and characteristic of each station or of each group of stations. The actuating member substantially operates the positioning movement of all said positionable stations.

The actuating member comprises a rotating element 15, whose rotation can be externally operated, (for example by means of a crank that can be movably inserted in a connection point 16) and also a wheel coupled, for example by means of a flexible motion transmission member, with two wheels 17 and 18, each one of the wheels is associated with a relative manoeuvring screw 13 and 14. To obtain the required ratio between the amount of the positioning shifts of the pre-heating stations 4 and 5 and, respectively, of the welding station 6, wheels 17 and 18 can be used with different diameters in an appropriate transmission ratio (as in the illustrated example), or manoeuvring screws 13 and 14 can be used with different step in an appropriate ratio, or other known devices that achieve the aim of carrying out controlled shifts of the different stations according to a preset ratio, can be used.

In the operation, when it is necessary to carry out a format change, passing, for example, from half-moulds of a preset size, to half-moulds of lower size, the positioning device allows to shift the stations, one in relation to the other, so as to position the half-moulds of a station in such way as they results to be contiguous to the half-moulds of the adjacent station.

The positioning device allows, in fact, drawing up the half-mould of subsequent stations of a distance equal to the sum of the differences between the sizes of the half-mould that has been replaced and the sizes of the half-mould that has been subsequently installed.

In order to compensate possible dimensional variations, due for example to shrinkages or to thermal expansions of the material to be formed, it is possible to operate the positioning device so as to obtain a fine regulation.

Likewise, dimensional variations due to the thermal expansion of the half-moulds can be compensated.

In practice, in order to compensate a material's shrinkage, the welding half-moulds are drawn up to the forming moulds for a distance corresponding to the above said shrinkage.

A regulation like that can be precluded by the fact that the ends of the welding half-moulds contact the respective ends of the forming half-moulds thus avoiding a further approaching.

In order to solve this inconvenience, are used forming and/or welding half-moulds with lower sizes in relation to the expected nominal sizes.

In particular, during the production of the forming half-moulds and of the welding half-moulds, which have to be in operation reciprocally adjacent, a portion of material constituting these half-moulds is removed in correspondence to their ends.

Therefore, half-moulds are obtained which are mounted asymmetrically on their respective stations.

The support element 12 (element that, as previously mentioned, is interposed between the actuating cams 10 of the welding half-moulds 61 and the rotating shaft 9 - with rotation axis that is parallel to the positioning direction - said support element 12 makes the cams to rotate, and is rotated by the shaft 9 but it is axially movable on the shaft itself) is connected with the positioning device by means of one or more rolling supports and can be axially shifted on the shaft, in both ways along the positioning direction by said device, with subsequent shift of the cams 10 rigidly connected therewith.

Substantially, the entire welding station 6 (in particular, from the support element 12, fitted with sliding coupling on the control shaft of the cams, including the cams 10, up to at least the half-moulds 61 that carry out the heat-welding of the webs) can be guided by the manoeuvring screw 14 to carry out positioning movements in both ways.

The last station (in the case in point the forming station 7) can be fixed, performing the reference function for the positioning of the other stations. Downstream of the last station, it is possible to arrange, along the feed line of the strip of containers, one or more different operating stations (for example a filling station of the containers, a sealing station of the containers, a station for cooling the filling material, a station for shearing the strip into sections, etc). These further operating stations (known and not shown) are spaced, i.e. they are not contiguous, in respect to the last operating station (forming station) described above.

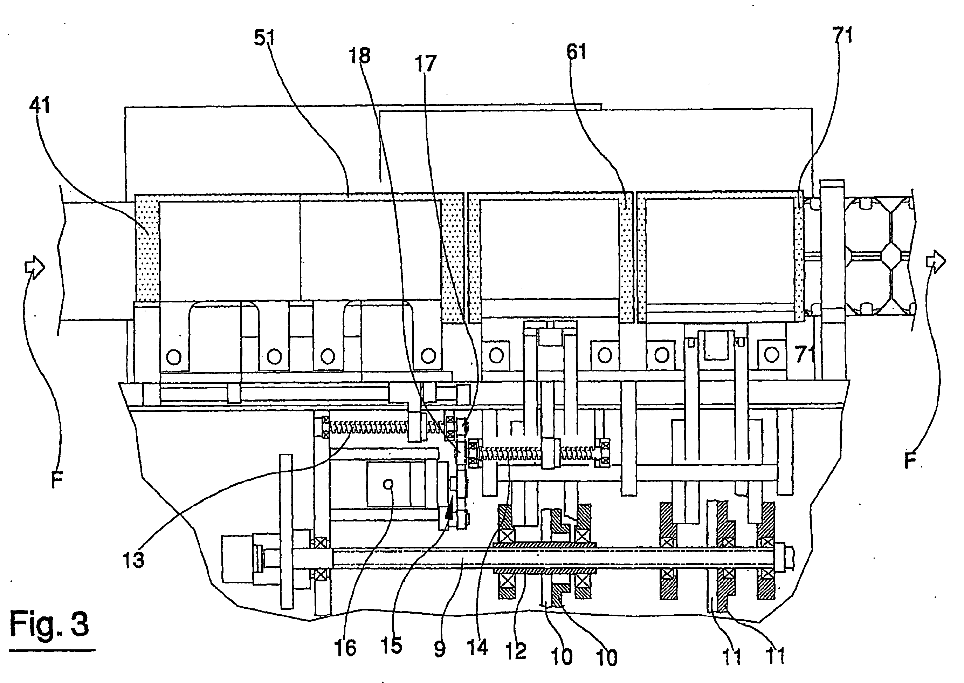

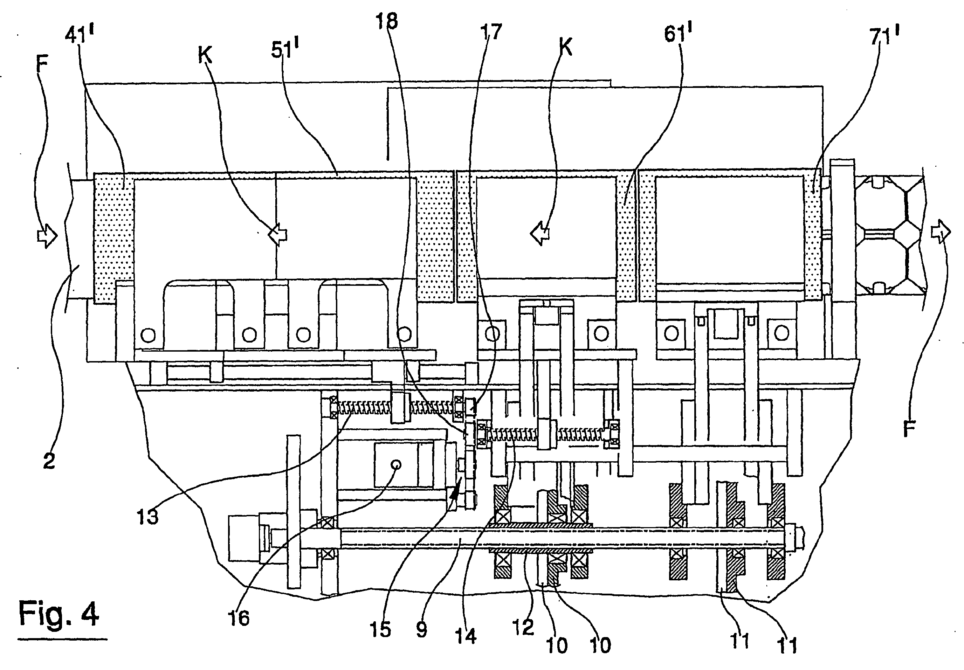

The first one of the mutually contiguous operating stations (in the case in point the pre-heating station 4) can be rigidly connected, as regards the positioning movement, with the second operating station immediately adjacent to it (in the case in point the pre-heating station 5). The group consisting of the two pre-heating stations 4 and 5 can then be guided by the manoeuvring screw 13 to perform positioning movements (in both ways) of a controlled amount in such a way that the shift of the group is in a preset relation to the shift of the adjacent welding station 6. The absolute value of the amount of said shifts depends on the advancing step that one wishes to obtain, which in turn depends on the distance of the containers arranged on the strip to be formed (as mentioned, the advancing step of the strip should preferably be an integer multiple of the distance of the containers), and the advancing step is selected in such a way that, after positioning, and after replacing of the half-moulds in the operating stations (half-moulds which are of a length that is almost the same as the new advancing step of the strip, and which are suitable for operating according to the new distance of the containers), the contiguity condition of the different stations is still maintained, so that the new half-moulds are still arranged one immediately after another. Figures 3 and 4 show the different operating stations in two configurations: in the first configuration (Figure 3) the half-moulds 41, 51, 61 and 71 (and therefore also the strip's advancing step) are shorter than those in the second configuration (Figure 4), in which the pre-heating and the welding stations have been shifted (in this case, with reference to Figure 4, to the left, as indicated by the arrows K), and the relative old half-moulds 41, 51, 61 and 71 have been replaced with longer new half-moulds 41', 51', 61' and 71' that are still arranged contiguously to one another.

In other embodiments that are not shown, it may be provided that the reciprocally contiguous operating stations are arranged in a different order (for example with the forming station arranged before the welding station), or that the operating stations are of different kind (for example, it is possible to provide a different number or the absence of the pre-heating stations; forming can also occur by means of aspiration rather than blowing; etc).

Numerous practical applicative modifications of constructional details can be applied to the invention without leaving the scope of the invention as claimed below.

## Claims

1. Machine for forming containers comprising a feed line arranged for indexing at least a continuous web (2), according to an advancing direction (F), a plurality of operating stations (4, 5, 6, 7) arranged along said feed line and operationally associated with the web for forming at least one continuous strip of containers (C), and positioning means (13, 14, 15, 16, 17, 18) to adjust the position of one or more operating stations (4, 5, 6) of said plurality of operating stations (4, 5, 6, 7) according to a positioning direction that is parallel to said advancing direction (F) **characterised in that** said positioning means (13, 14, 15, 16, 17, 18) shifts in a controlled manner two or more operating stations, or groups of operating stations (4, 5, 6), in the positioning direction, preferably simultaneously, the amount of the shifts or each station being in a preset relation to the amount of the shifts of the other stations.

2. Machine according to claim 1, and further comprising adjusting means arranged for adjusting the advancing step of said web (2).

3. Machine according to anyone of the preceding claims, wherein said positioning means comprises at least one manoeuvring screw (13, 14) arranged for operating the positioning movement of the operating station.

4. Machine according to anyone of the preceding claims, WHEREIN said one or more operating stations (4, 5, 6) are positionable, said operating stations being connected, by means of a motion transmission mechanism (17, 18) and according to a preset transmission ratio, to an actuating member (15, 16) that controls the positioning of said one or more stations.

5. Machine according to the claim 4, wherein each operating station (4, 5, 6) comprises actuating means to operate the opening and closing movement of operating elements (41, 51, 61), said actuating means comprising, for at least one of said operating stations (6), a drive unit operationally associated with the operating elements, or half-moulds, of said station and equipped with at least one rotating command member (10) that receives the rotation motion from a rotation shaft (9) with an axis parallel to the positioning direction of the station and which furthermore controls the opening and closing movement of the operating elements, the rotating command member (10) being axially movable in relation to said shaft (9) to follow the positioning movement of the operating station (6).

6. Machine according to anyone of the preceding claims, and further comprising at least one welding station (6) and at least one forming station (7), at least one of these stations being provided with the drive unit according to claim 5.

7. Machine according to anyone of the preceding claims, wherein at least one operating station (7) is fixed to perform the reference function for the positioning of the other stations (4, 5, 6) and said fixed reference operating station (7) is preferably arranged as the last station downstream the positionable operating stations (4, 5, 6).

8. Machine according to claim 7, and further comprising one or more operating stations arranged along said feed line, downstream said fixed reference operating station (7), to perform certain operations, such as filling or sealing, on the formed containers.

9. Machine according to claim 7 or 8, and further comprising one or more pre-heating stations (4, 5) of two webs (2) that face each other, at least one welding station (6) in which the webs (2) are welded to form one or more alveoli, at least one forming station (7) in which the alveolus is expanded within a forming cavity to form a container, the pre-heating stations (4, 5) and the welding station (6) being adjustable in position, the means for adjusting positioning of the operating stations operating the shifts of both the pre-heating stations (4, 5) and the welding station (6), the amount of the positioning shifts of the first ones being in a preset relation to the size of the shifts of the second one.

10. Machine according to the preceding claims, wherein in each station is provided a pair of operating elements (11, 51, 61, 71) opposite each others, among which the passage of the web is provided, said operating elements are removable and openable and closable in relation to the web.

## Patentansprüche

1. Maschine zum Formen von Behältern mit einer Förderlinie, die zum Indexieren wenigstens einer kontinuierlichen Warenbahn (2) in einer Vorwärtsrichtung (F) ausgebildet ist, mit einer Mehrzahl von Arbeitsstationen (4, 5, 6, 7), die entlang der Förderlinie angeordnet sind und arbeitsmäßig mit der Warenbahn zusammenhängen, um wenigstens einen kontinuierlichen Streifen aus Behältern (C) zu bilden, und mit Positioniermitteln (13, 14, 15, 16, 17, 18), um die Position von einer oder mehreren Arbeitsstationen (4, 5, 6) der Mehrzahl von Arbeitsstationen (4, 5, 6, 7) gemäß einer Positionierrichtung einzustellen, die parallel zu der Vorwärtsrichtung (F) ist, **dadurch gekennzeichnet, dass** das Positioniermittel (13, 14, 15, 16, 17, 18) in einer kontrollierten Weise zwei oder mehr Arbeitsstationen oder Gruppen von Arbeitsstationen (4, 5, 6) in der Positionierrichtung vorzugsweise gleichzeitig verschiebt, wobei die Größe der Verschiebung jeder Station in einem vorbestimmten Verhältnis zu der Größe der Verschiebung der anderen Stationen ist.

2. Maschine nach Anspruch 1, die ferner ein Einstellmittel aufweist, das zum Einstellen des Schrittes der Vorwärtsbewegung der Warenbahn (2) ausgebildet ist.

3. Maschine nach irgendeinem der vorhergehenden Ansprüche, bei der das Positioniermittel wenigstens eine Einstellschraube (13, 14) aufweist, die zum Betätigen der Positionierbewegung der Arbeitsstation ausgebildet ist.

4. Maschine nach irgendeinem der vorhergehenden Ansprüche, bei der eine oder mehrere Arbeitsstationen (4, 5, 6) positionierbar sind, wobei die Arbeitsstationen durch einen Bewegungsübertragungsmechanismus (17, 18) mit einem vorbestimmten Übertragungsverhältnis mit einem Betätigungselement (15, 16) verbunden sind, der die Positionierung der einen oder der mehreren Stationen steuert.

5. Maschine nach Anspruch 4, bei der jede Betätigungsstation (4, 5, 6) ein Betätigungsmittel aufweist, um die Öffnungs- und Schließbewegung von Arbeitselemente (41, 51, 61) zu steuern, wobei das Betätigungsmittel bei wenigstens einer der Arbeitsstationen (6) eine Antriebseinheit aufweist, die arbeitsmäßig mit den Arbeitselementen oder Halbformen der Station verbunden ist und mit wenigstens einem drehbaren Steuerelement (10) versehen ist, das die Drehbewegung von einer Drehwelle (9) erhält, mit einer Achse, die parallel zu der Positionierrichtung der Station ist und die ferner die Öffnungs- und Schließbewegung der Arbeitselemente steuert, wobei das Drehsteuerelement (10) in Bezug auf die Welle (9) axial beweglich ist, um der Positionierbewegung der Arbeitsstation (6) zu folgen.

6. Maschine nach irgendeinem der vorhergehenden Ansprüche, die ferner wenigstens eine Schweißstation (6) und wenigstens eine Formstation (7) aufweist, wobei wenigstens eine dieser Stationen mit der Antriebseinheit gemäß Anspruch 5 versehen ist.

7. Maschine nach irgendeinem der vorhergehenden Ansprüche, bei der wenigstens eine Arbeitsstation (7) fest ist, um die Referenzfunktion für die Positionierung der anderen Stationen (4, 5, 6) auszuführen, und wobei die feste Referenzarbeitsstation (7) vorzugsweise als letzte Station stromabwärts der positionierbaren Arbeitsstationen (1, 5, 6) angeordnet ist.

8. Maschine nach Anspruch 7, die ferner eine oder mehrere Arbeitsstationen aufweist, die entlang der genannten Förderlinie stromabwärts der festen Referenzarbeitsstation (7) angeordnet ist, um bestimmte Funktionen, wie etwa das Füllen oder Abdichten der gebildeten Behälter, durchzuführen.

9. Maschine nach Anspruch 7 oder 8, die ferner eine oder mehrere Vorheizstationen (4, 5) von zwei Materialbahnen (2) aufweist, die einander zugewandt sind, wenigstens eine Schweißstation (6), in der die Materialbahnen (2) miteinander verschweißt werden, um eine oder mehrere Waben zu bilden, wenigstens eine Formstation (7), in der die Wabe innerhalb eines Formhohlraums expandiert wird, um einen Behälter zu formen, wobei die Vorheizstationen (4, 5) und die Schweißstation (6) positionsmäßig einstellbar sind, wobei das Mittel zum einstellbaren Positionieren der Arbeitsstationen die Verschiebungen sowohl der Vorheizstationen (4, 5) als auch der Schweißstation (6) betätigt, wobei die Größe der Positionierverschiebung der ersten in einem vorbestimmten Verhältnis zu der Größe der Verschiebung der zweiten steht.

10. Maschine nach einem der vorhergehenden Ansprüche, bei der in jeder Station ein Paar von Betätigungselementen (11, 51, 61, 71) vorgesehen ist, die einander gegenüberliegen, zwischen denen der Durchlass der Materialbahn vorgesehen ist, wobei die Betätigungselemente in Bezug auf die Materialbahn entfernbar sind und geöffnet und geschlossen werden können.

## Revendications

1. Machine de formage de récipients, comprenant une ligne d'alimentation agencée de manière à faire avancer de manière intermittente au moins une bande continue (2) selon une direction de progression (F), une pluralité de postes de travail (4, 5, 6, 7) disposés le long de ladite ligne d'alimentation et associés opérationnellement à la bande pour former au moins un ruban continu de récipients (C), et des moyens de positionnement (13, 14, 15, 16, 17, 18) pour ajuster la position d'un ou plusieurs postes de travail (4, 5, 6) de ladite pluralité de postes de travail (4, 5, 6, 7) selon une direction de positionnement qui est parallèle à ladite direction de progression (F), ***caractérisée en ce que*** lesdits moyens de positionnement (13, 14, 15, 16, 17, 18) déplacent d'une manière contrôlée deux postes de travail ou plus, ou groupes de postes de travail (4, 5, 6), dans la direction de positionnement, préférablement de manière simultanée, la longueur des déplacements de chaque poste étant dans une relation prédéfinie par rapport à la longueur des déplacements des autres postes.

2. Machine selon la revendication 1, et comprenant de plus des moyens de réglage prévus pour régler le pas de progression de ladite bande (2).

3. Machine selon l'une quelconque des revendications précédentes, dans laquelle lesdits moyens de positionnement comprennent au moins une vis de manoeuvre (13, 14) prévue pour réaliser le mouvement de positionnement du poste de travail.

4. Machine selon l'une quelconque des revendications précédentes, dans laquelle le(s)dit(s) un ou plusieurs postes de travail (4, 5, 6) sont positionnables, lesdits postes de travail étant reliés, au moyen d'un mécanisme (17, 18) de transmission de mouvement et selon un rapport de transmission prédéfini, à un élément d'actionnement (15, 16) qui contrôle le positionnement dudit ou desdits un ou plusieurs postes.

5. Machine selon la revendication 4, dans laquelle chaque poste de travail (4, 5, 6) comprend des moyens d'actionnement pour opérer le mouvement d'ouverture et de fermeture des éléments opératifs (41, 51, 61), lesdits moyens d'actionnement comprenant, pour au moins l'un desdits postes de travail (6), une unité d'entraînement associée opérationnellement aux éléments opératifs, ou demi-moules, dudit poste et équipée d'au moins un organe de commande rotatif (10) qui reçoit le mouvement de rotation d'un arbre de rotation (9) avec un axe parallèle à la direction de positionnement du poste et qui de plus contrôle le mouvement d'ouverture et de fermeture des éléments opératifs, l'élément de commande rotatif (10) étant mobile axialement par rapport audit arbre (9) pour suivre le mouvement de positionnement du poste de travail (6).

6. Machine selon l'une quelconque des revendications précédentes, et comprenant de plus au moins un poste de soudage (6) et au moins un poste de formage (7), au moins l'un de ces postes étant équipé de l'unité d'entraînement de la revendication 5.

7. Machine selon l'une quelconque des revendications précédentes, dans laquelle au moins un poste de travail (7) est fixe pour remplir la fonction de référence pour le positionnement des autres postes (4, 5, 6) et ledit poste de travail de référence fixe (7) est, de manière préférée, agencé comme étant le dernier poste en aval des postes de travail positionnables (4, 5, 6).

8. Machine selon la revendication 7, et comprenant de plus un ou plusieurs postes de travail agencés le long de ladite ligne d'alimentation, en aval dudit poste de travail de référence fixe (7), pour effectuer certaines opérations, par exemple remplissage ou obturation, sur les récipients formés.

9. Machine selon la revendication 7 ou 8, et comprenant de plus un ou plusieurs postes de préchauffage (4, 5) de deux bandes (2) qui se font face, au moins un poste de soudage (6) dans lequel les bandes (2) sont soudées de manière à former une ou plusieurs alvéoles, au moins un poste de formage (7) dans lequel l'alvéole est dilatée dans une cavité de formage pour former un récipient, les postes de préchauffage (4, 5) et le poste de soudage (6) étant réglables en position, les moyens pour régler le positionnement des postes de travail effectuant les déplacements à la fois des postes de préchauffage (4, 5) et du poste de soudage (6), la longueur des déplacements de positionnement des premiers étant dans une relation prédéfinie avec la longueur des déplacements du deuxième.

10. Machine selon les revendications précédentes, dans laquelle dans chaque poste est prévue une paire d'éléments opératifs (11, 51, 61, 71) en vis-à-vis, entre lesquels est prévu le passage de la bande, lesdits éléments opératifs étant amovibles et ouvrables et refermables en relation avec la bande.
